# EUROPEAN PATENT SPECIFICATION

(11) **EP 1 987 260 B1**
(45) Date of publication and mention of the grant of the patent: **23.12.2009**
(21) Application number: 07726416.6
(22) Date of filing: 16.02.2007
(51) Int. Cl.: F16B 41/00, G09F 3/03, G01N 29/00, G08B 13/14, G08B 25/00

(54) **SEALING DEVICE AND METHOD FOR SEALING**
VERSCHLUSSVORRICHTUNG UND VERSCHLUSSVERFAHREN
DISPOSITIF DE SCELLEMENT ET PROCEDE DE SCELLEMENT

(30) Priority: 23.02.2006 EP 06110348
(43) Date of publication of application: 05.11.2008
(73) Proprietor: The European Community, represented by the European Commission, 1049 Brussels (BE)
(72) Inventor: AZZALIN, Graziano, I-28047 Oleggio (IT); SIRONI, Marco, I-21014 Laveno-Mombello (VA) (IT); TEBALDI, Piercarlo, I-21020 Brebbia (IT)
(74) Representative: Office Freylinger
(86) International application number: PCT/EP2007/051529
(87) International publication number: WO 2007/096311

(56) References cited:
- EP-A- 0 031 345
- EP-A- 0 134 476
- US-A1- 2004 172 554

## Description

### Introduction

The present invention relates to a sealing device, in particular for a commercial container. The present invention also relates to a method for sealing, in particular for sealing such a commercial container.

The document US 2004/0172554 discloses a sealing device according to the preamble of claims 1 and 14.

The sealing of containers is often necessary for security reasons. Secure sealing of a container is of particular importance in case the container holds dangerous substances, such as for example fissile materials. It is further important to be able to easily identify the container and thereby its contents. Sealing devices are therefore often provided with identification elements. In an effort to increase security of the seal, such identification elements are often concealed and difficult to tamper with. As a result, such sealing devices can become rather expensive to produce. Furthermore, it is often difficult to verify if the sealing device has been correctly installed and if, and particularly when, it has been tampered with or broken. Depending on the contents of the container, it can be of great importance to be quickly informed of an illegal opening of the container.

It is currently not possible to easily verify if the sealing device is correctly installed. Some systems exist for verifying if the sealing device has been tampered with. These systems are however generally unreliable or to complex and expensive.

There is hence a need to further improve the security of such sealing devices.

### Object of the invention

The object of the present invention is to provide an improved sealing device, which allows to easily and quickly verify for correct installation. This object is solved by the sealing device described in claim 1. It is a further object of the present invention to provide an improved sealing device, which allows to easily and quickly check the integrity of the sealing device. This object is solved by the method described in claim 14.

### General description of the invention

The present invention proposes a sealing device comprising a first sealing element having a housing with an internal chamber therein; and a second sealing element having a shaft. When the first and second sealing elements are connected, the shaft of the second sealing element extends into the internal chamber of the first sealing element through an opening in its housing. According to an important aspect of the present invention, the first sealing element comprises a flexible membrane for dividing the internal chamber into a first chamber and a second chamber, the first chamber facing the second sealing element, a pressure sensor connected to the second chamber for sensing a pressure in the second chamber; and a transmitter for receiving a signal indicative of the pressure in the second chamber and for transmitting the signal to a monitoring station. The shaft of the second sealing element has a length such that, when the first and second sealing elements are connected, the shaft at least partially pushes the flexible membrane into the second chamber so as to reduce the volume of the second chamber.

The pressure sensor in the housing allows monitoring of the pressure in the second chamber. The configuration of the sealing device is such that, when the second sealing element is connected to the first sealing element, the pressure in the second chamber is increased due to the introduction of the shaft in the internal chamber. If the second sealing element is correctly connected to the first sealing element, the pressure is increased so as to reach a predetermined pressure range. As long as the second sealing element is not correctly connected to the first sealing device, the shaft does not sufficiently penetrate into the internal chamber of the housing. In turn, this means that the pressure in the second chamber has not sufficiently increased to reach the predetermined pressure range. Only once the pressure in the second chamber has reached the predetermined pressure range, it can be concluded that the sealing device is correctly installed. By sensing the pressure in the second chamber, it is hence possible to determine if the first and second sealing elements are correctly connected, i.e. if the sealing device is correctly installed.

Furthermore, after installation of the sealing device, the integrity of the sealing device can be checked. When the sealing device is broken, the pressure in the second chamber changes and leaves the predetermined pressure range. Indeed, as the first and second sealing elements are separated, the shaft is withdrawn from the internal chamber and the pressure in the second chamber drops. When the pressure in the second chamber drops below a predetermined pressure threshold, it can be concluded that the sealing device is broken or disassembled. By sensing the pressure in the second chamber, it is hence possible to determine if the first and second sealing elements are still correctly connected, i.e. if the integrity of the sealing device is maintained.

The transmitter in the first sealing element receives a signal indicative of the pressure in the second chamber and transmits it to a monitoring station. The monitoring station, which may be installed at a remote location, can hence be used to verify if the sealing device has been correctly installed and to verify the integrity of the sealing device. If the integrity of the sealing device is violated, an alarm can be raised.

By providing such a membrane, it can be more easily ensured that the chamber to which the pressure sensor is connected is gastight. The internal chamber is divided into two separate chambers, wherein one, the first chamber, comprises an opening in the housing for receiving the shaft of the second sealing element, and the other, the second chamber, comprises the pressure sensor. By separating the chamber comprising the pressure sensor from the opening in the housing, it is no longer necessary to provide a gastight connection between the first and second sealing elements. This considerably simplifies the connection between the first and second sealing elements.

The membrane is preferably resilient, such that the membrane can return to its initial position when the shaft is withdrawn from the internal chamber, thereby causing a pressure drop in the second chamber. The resilience of the membrane can further provide an ejection force for the shaft, pushing the shaft out of the internal chamber more quickly, thereby obtaining a faster pressure drop in the second chamber. The violation of the integrity of the sealing device can hence be detected more quickly.

The first sealing element can further comprise fixing means for fixing a peripheral region of the membrane to an inner wall of the housing, wherein a central portion of the membrane can be pushed into the second chamber by the shaft.

The second sealing element can comprise a base with a sleeve perpendicularly mounted thereon, the shaft being received in the sleeve and, the base cooperating with the housing of the first sealing element for sandwiching fastening members between the first and second sealing elements.

According to a preferred embodiment of the invention, the housing is substantially cylindrical and has a substantially circular cross-section.

The sealing device preferably further comprises connecting means between the first and second sealing elements for connecting the first and second sealing elements and for maintaining the first and second sealing elements in their connected relationship.

Preferably, the sleeve has a threaded portion and the opening in the housing has a corresponding thread for receiving the threaded portion. This enables an easy connection of the second sealing element to the first sealing element, wherein the second sealing element is screwed to the first sealing element and tightened until the sealing device is correctly installed.

In a preferred embodiment, the transmitter is configured to continuously or periodically transmit the signal indicative of the pressure in the internal chamber to a monitoring station. By continuously or periodically, preferably at short intervals, transmitting information from the sealing device to a monitoring station, the status of the sealing device can be monitored in real time.

The transmitter preferably transmits automatically and is to that effect battery powered. It is however not excluded to provide a transmitter which only transmits the signal upon request e.g. from the monitoring station.

Advantageously, the transmitter comprises a modem using the GSM (e.g. GPRS) or UMTS standard for transmitting the signal indicative of the pressure in the internal chamber to the monitoring station. Such a transmitter can hence use existing networks for communicating with the monitoring stations, thus assuring low cost and high availability of communications. The status information of the sealing device can hence easily be transmitted all over the world. The correct installation and integrity of the sealing device can therefore be verified over very long distances.

Alternatively, the transmitter can be a RF transmitter for transmitting the signal indicative of the pressure in the internal chamber to the monitoring station. In such a case, the monitoring station can however generally not be too remote. The monitoring station can be a port reading station at a container park or a handheld reading station. It will however be appreciated that if the reading station is not within the transmitting range of the RF transmitter, the information cannot be transmitted to the monitoring station.

The sealing device can further comprise a transponder for storing contents information, travel information and/or inspection information of the container.

The sealing device can further comprise an event logger for storing a log of events. In case a communication cannot be established between the transmitter and the monitoring station, the information to be transmitted can be temporarily stored in the event logger. The stored information can then be transmitted to the monitoring station once the communication is restored.

The present invention further proposes a method for sealing a container comprising the steps of:
providing a sealing device having a first sealing element and a second sealing element, the first sealing element comprising a housing with an internal chamber therein, the first sealing element comprising a flexible membrane for dividing the internal chamber into a first chamber and a second chamber, the first chamber facing the second sealing element; and the second sealing element comprising a shaft having a length such that, when the first and second sealing elements are connected, the shaft at least partially pushes the flexible membrane into the second chamber so as to reduce the volume of the second chamber;
passing the shaft of the second sealing element through fastening members of the container;
inserting the shaft of the second sealing element into the internal chamber of the first sealing element through an opening in the housing, thereby changing the pressure in the second chamber;
sensing the pressure in the second chamber by means of a pressure sensor connected to the second chamber; and
transmitting a signal indicative of the pressure measured in the second chamber to a monitoring station.

By sensing the pressure in the second chamber, the connection status of the second sealing element to the first sealing element can be determined. The correct installation and the integrity of the sealing device can hence be verified by analysing a signal indicative of the pressure in the second chamber.

The method preferably comprises the further steps of determining whether the measured pressure has exceeded a first predefined pressure threshold and concluding that the sealing device is correctly installed only if said measured pressure has exceeded said first predefined pressure threshold. If the first and second sealing elements are correctly connected, the shaft of the second sealing element penetrates the internal chamber sufficiently to increase the pressure in the second chamber so as to exceed the first predetermined pressure threshold. If the first predetermined pressure threshold is exceeded, it can then be concluded that the first and second sealing elements have been correctly connected and that the sealing device has hence been correctly installed.

The method advantageously comprises the further steps of determining whether the measured pressure has fallen below a second predefined pressure threshold and concluding that, if the measured pressure has fallen below the second predefined pressure threshold, the sealing device has been broken. When the pressure in the second chamber drops below a second predefined pressure threshold, this is an indication that the shaft of the second sealing element has been at least partially withdrawn from the internal chamber of the first sealing element or that the housing of the first sealing element has been broken. This points to a violation of the integrity of the sealing device. The second predefined pressure threshold should preferably be below or equal to the first predefined pressure threshold.

The method can comprise the further steps of determining whether the measured pressure has exceeded a third predefined pressure threshold and concluding that, if the measured pressure has exceeded the third predefined pressure threshold, the sealing device has been broken. When the pressure in the second chamber exceeds a third predefined pressure threshold, this can be an indication that the housing of the first sealing element has been broken, in particular if the sealing device is arranged in a high pressure environment. This points to a violation of the integrity of the sealing device. The third predefined pressure threshold should be higher than the first predefined pressure threshold.

Preferably, the second and third predefined pressure thresholds are chosen so as to allow some pressure changes due to e.g. temperature variations.

### Detailed description with respect to the figures

The present invention will be more apparent from the following description of a not limiting embodiment with reference to the attached drawings, wherein
- Fig. 1: shows a schematic cut through a sealing device according to the invention; and
- Fig.2: shows a schematic cut through the sealing device of Fig.1 in its unconnected state.

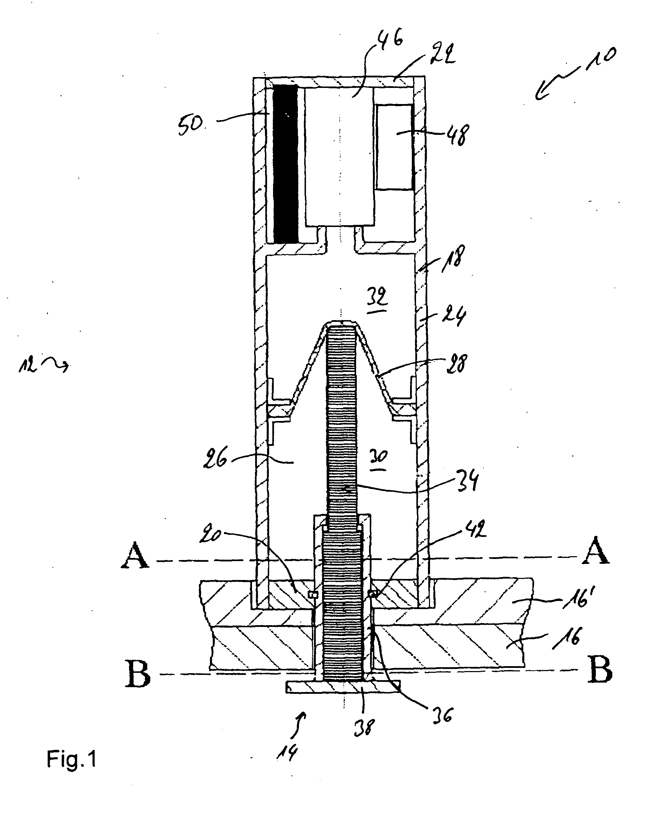

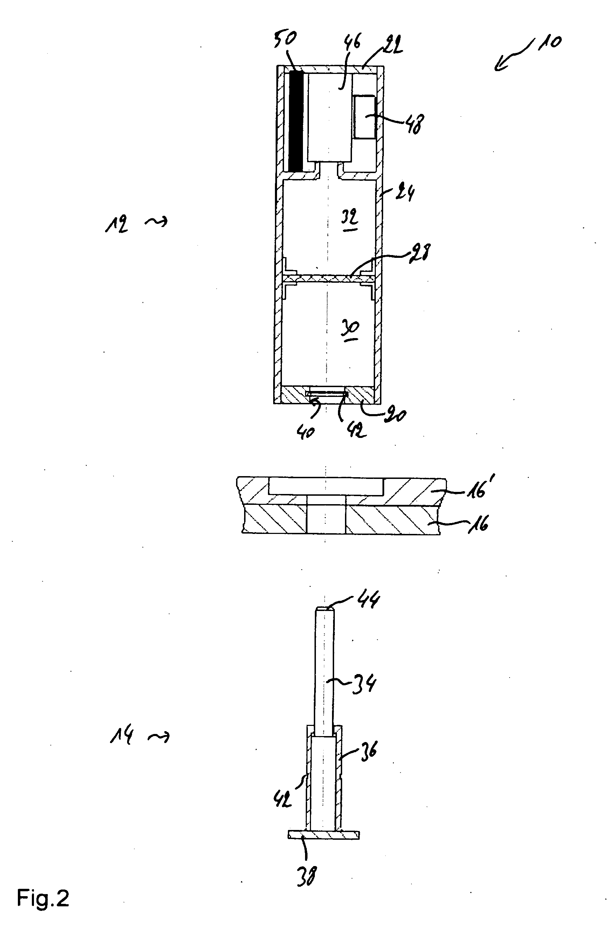

Figures 1 and 2 show a sealing device 10 comprising a first sealing element 12 and a second sealing element 14, which can be connected to the first sealing element 12. The first and second sealing elements 12, 14 are arranged and configured such that, when they are connected, two fastening members 16, 16' can be sandwiched therebetween. Fastening members 16, 16' can be any elements that need to be connected together in a secure way, such as e.g. a container body and a container door or respective fixing plates thereof. In the present invention any means for fixing two elements together, such as fixing plates, will be referred to as "fastening members".

The first sealing element 12 comprises a generally cylindrical housing 18 having a first end wall 20, a second end wall 22 and an enveloping wall 24 extending therebetween. The first and second end walls 20, 22 and the enveloping wall 24 define an internal chamber 26 inside the housing 18. The housing 18 further comprises a flexible membrane 28 therein for dividing the internal chamber 26 into a first chamber 30 and a second chamber 32, wherein the first chamber 30 is delimited by the flexible membrane 28, the first end wall 20 and the enveloping wall 24, whereas the second chamber 32 is delimited by the flexible membrane 28, the second end wall 22 and the enveloping wall 24.

The second sealing element 14 comprises a shaft 34 received in a sleeve 36 perpendicularly mounted on a base 38. The first end wall 20 of the first sealing element 12 comprises an opening 40 therein, having a diameter corresponding substantially to an outer diameter of the sleeve 36, such that the shaft 34 and sleeve 36 can penetrate the internal chamber 26 of the housing 18. The sealing device 10 further comprises connecting means 42 between the first and second sealing elements 12, 14 in order to, once connected, maintain the first and second sealing elements 12, 14 in their connected relationship.

The shaft 34 has a length such that, when the second sealing element 14 is correctly connected to the first sealing element 12, a free end 44 of the shaft 34 is in contact with the membrane 28 and pushes the latter into the second chamber 32. The second chamber 32 is gastight such that, as the membrane is pushed into the second chamber 32, the pressure in the second chamber 32 is increased.

A pressure sensor 46 is arranged in the housing 18 and is connected to the second chamber 32 for sensing the pressure therein. The pressure sensor 46 is preferably an active pressure sensor continuously or periodically sensing the pressure in the second chamber 32. The pressure sensor 46 is connected to a transmitter 48 for transmitting a pressure signal to a monitoring station (not shown).

Due to the pressure sensor 46, the pressure in the second chamber 32 can be determined. It can be concluded that the sealing device 10 has been correctly installed if the pressure in the second chamber 32 exceeds a first predefined pressure threshold. Indeed, when the second sealing element 14 is correctly connected to the first sealing element 12, the shaft 34 extends into the second chamber 32 by a certain amount, thereby compressing the gas, generally air, in the second chamber 32 by a certain amount. A signal indicative of the pressure in the second chamber 32 is received by the transmitter 48 and transmitted to the monitoring station. If the monitoring station can, based on the received signal, determine that the pressure in the second chamber 32 is above the first predefined pressure threshold, it can be concluded that the first and second sealing elements 12, 14 are correctly connected and that the sealing device 10 is correctly installed.

Furthermore, the pressure sensor 46 can be used to verify the integrity of the sealing device 10. Indeed, if the sealing device 10 is broken, e.g. along lines A-A or B-B in Fig.1, the first and second sealing elements 12, 14 are no longer correctly connected. The shaft 34 of the second sealing element 14 is retracted from the internal chamber 26 of the first sealing element 12, thereby reducing the pressure in the second chamber 32. If the pressure in the second chamber 32 drops below a second pressure threshold, it can be concluded that the sealing device 10 has been broken and an alarm can then be raised.

The transmitter 48 comprises a modem using the GSM, e.g. GPRS, or UMTS standard for transmitting the signal indicative of the pressure in the second chamber 32 to the monitoring station. Such a transmitter 48 can hence use existing networks for communicating with the monitoring stations, thus assuring low cost and high availability of communications. The status information of the sealing device 10 can hence easily be transmitted all over the world. The correct installation and integrity of the sealing device 10 can therefore be verified over very long distances. The transmitter 48 is, according to a preferred embodiment configured to periodically, at short intervals, transmit the pressure information from the pressure sensor 46 to the monitoring station.

Apart from the pressure information, the transmitter 48 can be used to transmit other information to the monitoring station, such as contents information, travel information or inspection information of the container. Depending on the nature of the shipment, audio and video files can also be transmitted if required.

The sealing device further comprises a programmable read/write transponder 50 for storing contents information, travel information and/or inspection information of the container. Such a transponder 50 can be read by means of a reading device communicating with the transponder 50 via radio frequency. The reading device can also be used to store information in the transponder 50. The transponder 50 can be used to identify the container and its contents on site. If the transponder 50 is linked to the transmitter 48, information from the transponder 50 can also be transmitted to the monitoring station.

An event logger (not shown) can furthermore be provided in the sealing device 10 for storing event information therein. Such an event logger can e.g. comprise a log of the measured pressure in the second chamber 32 over a particular period of time. The event logger can occupy a portion of the memory of the transponder 50. Alternatively, a separate memory can be provided for the event logger. If the transmitter cannot communicate with the monitoring station, the pressure information can be stored in the event logger and sent to the monitoring station once communication has been restored.

### List of Reference Signs

- 10: sealing device
- 12: first sealing element
- 14: second sealing element
- 16,16': fastening members
- 18: housing
- 20: first end wall
- 22: second end wall
- 24: enveloping wall
- 26: internal chamber
- 28: flexible membrane
- 30: first chamber
- 32: second chamber
- 34: shaft
- 36: sleeve
- 38: base
- 40: opening
- 42: connecting means
- 44: free end
- 46: pressure sensor
- 48: transmitter
- 50: programmable read/write transponder

## Claims

1. Sealing device (10) comprising
a first sealing element (12) having a housing (18) with an internal chamber (26) therein; and
a second sealing element (14) having a shaft (34),
wherein, when said first and second sealing elements (12, 14) are connected, said shaft (34) of said second sealing element (14) extends into said internal chamber (26) of said first sealing element (12) through an opening (40) in its housing (18),
**characterised in that** said first sealing element (12) comprises
a flexible membrane (28) for dividing said internal chamber (26) into a first chamber (30) and a second chamber (32), said first chamber (30) facing said second sealing element (14),
a pressure sensor (46) connected to said second chamber (32) for sensing a pressure in said second chamber (32), and
a transmitter (48) for receiving a signal indicative of said pressure in said second chamber (32) and for transmitting said signal to a monitoring station,
said shaft (34) of said second sealing element (14) having a length such that when said first and second sealing element (12, 14) are connected, said shaft (34) at least partially pushes said flexible membrane (28) into said second chamber (32) so as to reduce the volume of said second chamber (32).

2. Sealing device according to claim 1, wherein said membrane is resilient.

3. Sealing device according to claim 1 or 2, further comprising fixing means for fixing a peripheral region of said membrane to an inner wall of said housing, wherein a central portion of said membrane can be pushed into said second chamber by said shaft.

4. Sealing device according to any of the previous claims, wherein said second sealing element comprises a base with a sleeve perpendicularly mounted thereon, said shaft being received in said sleeve and, said base cooperating with said housing of said first sealing element for sandwiching fastening members between said first and second sealing elements.

5. Sealing device according to any of the previous claims, wherein said housing is substantially cylindrical.

6. Sealing device according to any of the previous claims, wherein said housing has a substantially circular cross-section.

7. Sealing device according to any of the previous claims, further comprising connecting means between said first and second sealing elements.

8. Sealing device according to claims 4 and 7, wherein said sleeve has a threaded portion and said opening in said housing has a corresponding thread for receiving said threaded portion.

9. Sealing device according to any of the previous claims, wherein said transmitter is configured to continuously or periodically transmit said signal indicative of said pressure in said internal chamber to a monitoring station.

10. Sealing device according to any of claims 1 to 9, wherein said transmitter comprises a modem using the GSM or UMTS standard.

11. Sealing device according to any of claims 1 to 9, wherein said transmitter is a RF transmitter.

12. Sealing device according to any of the previous claims, further comprising a transponder.

13. Sealing device according to any of the previous claims, further comprising an event logger.

14. Method for sealing a container comprising the steps of:
providing a sealing device (10) having a first sealing element (12) and a second sealing element (14), said first sealing (12) element comprising a housing (18) with an internal chamber (26) therein, **characterised in that** said first sealing element (12) comprising a flexible membrane (28) for dividing said internal chamber into a first chamber (30) and a second chamber (32), said first chamber (30) facing said second sealing element (14); and said second sealing element (14) comprising a shaft (34), said shaft having a length such that, when said first and second sealing elements (12, 14) are connected, said shaft (34) at least partially pushes said flexible membrane (28) into said second chamber (32) so as to reduce the volume of said second chamber (32),
passing said shaft (34) of said second sealing element through fastening members of the container;
inserting said shaft (34) of said second sealing element (14) into said internal chamber (26) of said first sealing element (12) through an opening (40) in said housing (18), thereby changing the pressure in said second chamber;
sensing the pressure in said second chamber by means of a pressure sensor (46) connected to said second chamber (32), and
transmitting a signal indicative of the pressure measured in said second chamber (32) to a monitoring station.

15. Method according to claim 14, comprising the further steps of:
determining whether the measured pressure has exceeded a first predefined pressure threshold; and
concluding that the sealing device is correctly installed only if said measured pressure has exceeded said first predefined pressure threshold.

16. Method according to claim 14 or 15, comprising the further steps of:
determining whether the measured pressure has fallen below a second predefined pressure threshold; and
concluding that, if said measured pressure has fallen below said second predefined pressure threshold, said sealing device has been broken.

17. Method according to any of claims 14 to 16, comprising the further steps of:
determining whether the measured pressure has exceeded a third predefined pressure threshold; and
concluding that, if said measured pressure has exceeded said third predefined pressure threshold, said sealing device has been broken.

## Patentansprüche

1. Verschlussvorrichtung (10) umfassend
ein erstes Verschlusselement (12) mit einem Gehäuse (18) mit einem Innenraum (26) darin; und
ein zweites Verschlusselement (14) mit einem Schaft (34),
wobei, wenn das erste und das zweite Verschlusselement (12, 14) miteinander verbunden sind, der Schaft (34) des zweiten Verschlusselements (14) sich in den Innenraum (26) des ersten Verschlusselements (12) durch eine Öffnung (40) in dessen Gehäuse (18) hindurch erstreckt,
**dadurch gekennzeichnet, dass** das erste Verschlusselement (12) Folgendes umfasst:
eine flexible Membran (28) zur Unterteilung des Innenraums (26) in einen ersten Raum (30) und einen zweiten Raum (32), wobei der erste Raum (30) dem zweiten Verschlusselement (14) zugewandt ist,
einen Drucksensor (46), der mit dem zweiten Raum (32) verbunden ist, um einen Druck im zweiten Raum (32) zu erfassen, und
einen Sender (48) zum Empfangen eines den Druck im zweiten Raum (32) angebenden Signals und zum Übertragen des Signals an eine Überwachungsstation,
wobei der Schaft (34) des zweiten Verschlusselements (14) eine derartige Länge aufweist, dass, wenn das erste und das zweite Verschlusselement (12, 14) miteinander verbunden sind, der Schaft (34) zumindest teilweise die flexible Membran (28) derart in den zweiten Raum (32) schiebt, dass das Volumen des zweiten Raums (32) reduziert wird

2. Verschlussvorrichtung nach Anspruch 1, wobei die Membran elastisch ist.

3. Verschlussvorrichtung nach Anspruch 1 oder 2, ferner umfassend Befestigungsmittel zum Befestigen eines Randbereichs der Membran an einer Innenwand des Gehäuses, wobei ein mittlerer Abschnitt der Membran durch den Schaft in den zweiten Raum geschoben werden kann.

4. Verschlussvorrichtung nach irgendeinem der vorangehenden Ansprüche, wobei das zweite Verschlusselement einen Sockel mit einer senkrecht daran angebrachten Hülse umfasst, wobei der Schaft in der Hülse aufgenommen ist, wobei der Sockel mit dem Gehäuse des ersten Verschlusselements zusammenwirkt, um Befestigungselemente zwischen dem ersten und zweiten Verschlusselement aufzunehmen

5. Verschlussvorrichtung nach irgendeinem der vorangehenden Ansprüche, wobei das Gehäuse im Wesentlichen zylindrisch ist

6. Verschlussvorrichtung nach irgendeinem der vorangehenden Ansprüche, wobei das Gehäuse einen im Wesentlichen kreisförmigen Querschnitt aufweist

7. Verschlussvorrichtung nach irgendeinem der vorangehenden Ansprüche, ferner umfassend Verbindungsmittel zwischen dem ersten und zweiten Verschlusselement

8. Verschlussvorrichtung nach Anspruch 4 und 7, wobei die Hülse einen Gewindeabschnitt aufweist und die Öffnung im Gehäuse ein entsprechendes Gewinde zur Aufnahme des Gewindeabschnitts aufweist

9. Verschlussvorrichtung nach irgendeinem der vorangehenden Ansprüche, wobei der Sender derart konfiguriert ist, dass er das den Druck im Innenraum angebende Signal kontinuierlich oder periodisch an eine Überwachungsstation überträgt

10. Verschlussvorrichtung nach irgendeinem der Ansprüche 1 bis 9, wobei der Sender ein Modem umfasst, das den GSM- oder UMTS-Standard verwendet

11. Verschlussvorrichtung nach irgendeinem der Ansprüche 1 bis 9, wobei der Sender ein RF-Sender ist

12. Verschlussvorrichtung nach irgendeinem der vorangehenden Ansprüche, ferner umfassend einen Transponder.

13. Verschlussvorrichtung nach irgendeinem der vorangehenden Ansprüche, ferner umfassend einen Ereignislogger.

14. Verfahren zum Verschließen eines Behälters, umfassend folgende Schritte: Bereitstellen einer Verschlussvorrichtung (10) mit einem ersten Verschlusselement (12) und einem zweiten Verschlusselement (14), wobei das erste Verschlusselement (12) ein Gehäuse (18) mit einem Innenraum (26) darin umfasst, **dadurch gekennzeichnet, dass** das erste Verschlusselement (12) eine flexible Membran (28) zur Unterteilung des Innenraums in einen ersten Raum (30) und einen zweiten Raum (32) umfasst, wobei der erste Raum (30) dem zweiten Verschlusselement (14) zugewandt ist; und wobei das zweite Verschlusselement (14) einen Schaft (34) umfasst, wobei der Schaft eine derartige Länge aufweist, dass, wenn das erste und das zweite Verschlusselement (12, 14) miteinander verbunden sind, der Schaft (34) zumindest teilweise die flexible Membran (28) derart in den zweiten Raum (32) schiebt, dass das Volumen des zweiten Raums (32) reduziert wird;
Hindurchführen des Schafts (34) des zweiten Verschlusselements durch Befestigungselemente des Behälters;
Einführen des Schafts (34) des zweiten Verschlusselements (14) durch eine Öffnung (40) im Gehäuse (18) hindurch in den Innenraum (26) des ersten Verschlusselements (12), wodurch der Druck im zweiten Raum verändert wird;
Erfassen des Drucks im zweiten Raum mittels eines mit dem zweiten Raum (32) verbundenen Drucksensors (46); und
Übertragen eines Signals, das den im zweiten Raum (32) gemessenen Druck angibt, an eine Überwachungsstation

15. Verfahren nach Anspruch 14, umfassend folgende weitere Schritte:
Bestimmen, ob der gemessene Druck eine erste vordefinierte Druckschwelle überschritten hat; und
Schlussfolgern, dass die Verschlussvorrichtung nur dann korrekt eingebaut ist, wenn der gemessene Druck die erste vordefinierte Druckschwelle überschritten hat

16. Verfahren nach Anspruch 14 oder 15, umfassend folgende weitere Schritte:
Bestimmen, ob der gemessene Druck unter eine zweite vordefinierte Druckschwelle gesunken ist; und
Schlussfolgern, dass, wenn der gemessene Druck unter die zweite vordefinierte Druckschwelle gesunken ist, die Verschlussvorrichtung aufgebrochen wurde

17. Verfahren nach irgendeinem der Ansprüche 14 bis 16, umfassend folgende weitere Schritte:
Bestimmen, ob der gemessene Druck eine dritte vordefinierte Druckschwelle überschritten hat; und
Schlussfolgern, dass, wenn der gemessene Druck die dritte vordefinierte Druckschwelle überschritten hat, die Verschlussvorrichtung aufgebrochen wurde

## Revendications

1. Dispositif de scellement (10) comprenant
un premier élément de scellement (12) ayant un logement (18) avec une chambre interne (26) dans celui-ci ; et
un deuxième élément de scellement (14) ayant un arbre (34),
dans lequel, lorsque lesdits premier et deuxième éléments de scellement (12, 14) sont connectés, ledit arbre (34) dudit deuxième élément de scellement (14) s'étend à l'intérieur de ladite chambre interne (26) dudit premier élément de scellement (12) à travers une ouverture (40) dans son logement (18),
**caractérisé en ce que** ledit premier élément de scellement (12) comprend
une membrane flexible (28) pour diviser ladite chambre interne (26) en une première chambre (30) et une deuxième chambre (32), ladite première chambre (30) faisant face audit deuxième élément de scellement (14),
un détecteur de pression (46) connecté à ladite deuxième chambre (32) pour détecter une pression dans ladite deuxième chambre (32), et
un transmetteur (48) pour recevoir un signal indicateur de ladite pression dans ladite deuxième chambre (32) et pour transmettre ledit signal à une station de surveillance,
ledit arbre (34) dudit deuxième élément de scellement (14) ayant une longueur telle que, lorsque lesdits premier et deuxième éléments de scellement (12, 14) sont connectés, ledit arbre (34) pousse au moins partiellement ladite membrane flexible (28) à l'intérieur de ladite deuxième chambre (32) de façon à réduire le volume de ladite deuxième chambre (32)

2. Dispositif de scellement selon la revendication 1, dans lequel ladite membrane est résiliente.

3. Dispositif de scellement selon la revendication 1 ou 2, comprenant en outre un moyen de fixation pour fixer une région périphérique de ladite membrane à une paroi intérieure dudit logement, dans lequel une partie centrale de ladite membrane peut être poussée à l'intérieur de ladite deuxième chambre par ledit arbre

4. Dispositif de scellement selon l'une quelconque des revendications précédentes, dans lequel ledit deuxième élément de scellement comprend une base avec un manchon monté perpendiculairement sur celle-ci, ledit arbre étant reçu dans ledit manchon et ladite base coopérant avec ledit logement dudit premier élément de scellement pour prendre en sandwich des éléments de fixation entre lesdits premier et deuxième éléments de scellement.

5. Dispositif de scellement selon l'une quelconque des revendications précédentes, dans lequel ledit logement est substantiellement cylindrique

6. Dispositif de scellement selon l'une quelconque des revendications précédentes, dans lequel ledit logement a une section transversale substantiellement circulaire

7. Dispositif de scellement selon l'une quelconque des revendications précédentes, comprenant en outre un moyen de connexion entre lesdits premier et deuxième éléments de scellement

8. Dispositif de scellement selon les revendications 4 et 7, dans lequel ledit manchon a une partie filetée et ladite ouverture dans ledit logement a un filetage correspondant pour recevoir ladite partie filetée

9. Dispositif de scellement selon l'une quelconque des revendications précédentes, dans lequel ledit transmetteur est configuré pour transmettre de façon continue ou périodique ledit signal indicateur de ladite pression dans ladite chambre interne à une station de surveillance

10. Dispositif de scellement selon l'une quelconque des revendications 1 à 9, dans lequel ledit transmetteur comprend un modem utilisant la norme GSM ou UMTS

11. Dispositif de scellement selon l'une quelconque des revendications 1 à 9, dans lequel ledit transmetteur est un transmetteur RF

12. Dispositif de scellement selon l'une quelconque des revendications précédentes, comprenant en outre un transpondeur

13. Dispositif de scellement selon l'une quelconque des revendications précédentes, comprenant en outre un enregistreur d'événements

14. Procédé de scellement d'un conteneur comprenant les étapes de:
prévision d'un dispositif de scellement (10) ayant premier élément de scellement (12) et un deuxième élément de scellement (14), ledit premier élément de scellement (12) comprenant un logement (18) avec une chambre interne (26) dans celui-ci, **caractérisé en ce que** ledit premier élément de scellement (12) comprenant une membrane flexible (28) pour diviser ladite chambre interne en une première chambre (30) et une deuxième chambre (32), ladite première chambre (30) faisant face audit deuxième élément de scellement (14), et ledit deuxième élément de scellement (14) comprenant un arbre (34), ledit arbre ayant une longueur telle que, lorsque lesdits premier et deuxième éléments de scellement (12, 14) sont connectés, ledit arbre (34) pousse au moins partiellement ladite membrane flexible (28) à l'intérieur de ladite deuxième chambre (32) de façon à réduire le volume de ladite deuxième chambre (32) ;
passage dudit arbre (34) dudit deuxième élément de scellement à travers des éléments de fixation du conteneur ;
insertion dudit arbre (34) dudit deuxième élément de scellement (14) à l'intérieur de ladite chambre interne (26) dudit premier élément de scellement (12) à travers une ouverture (40) dans ledit logement (18), changeant ainsi la pression dans ladite deuxième chambre ;
détection de la pression dans ladite deuxième chambre au moyen d'un détecteur de pression (46) connecté à ladite deuxième chambre (32) ; et
transmission d'un signal indicateur de la pression mesurée dans ladite deuxième chambre (32) à une station de surveillance

15. Procédé selon la revendication 14, comprenant les étapes supplémentaires de:
détermination si la pression mesurée a excédé un premier seuil de pression prédéfini ; et
conclusion que le dispositif de scellement est correctement installé uniquement si ladite pression mesurée a excédé ledit premier seuil de pression prédéfini.

16. Procédé selon la revendication 14 ou 15, comprenant les étapes supplémentaires de :
détermination si la pression mesurée est tombée en-dessous d'un deuxième seuil de pression prédéfini ; et
conclusion que, si ladite pression mesurée est tombée en-dessous dudit deuxième seuil de pression prédéfini, ledit dispositif de scellement a été cassé

17. Procédé selon l'une quelconque des revendications 14 à 16, comprenant les étapes supplémentaires de :
détermination si la pression mesurée a excédé un troisième seuil de pression prédéfini ; et
conclusion que, si ladite pression mesurée a excédé ledit troisième seuil de pression prédéfini, ledit dispositif de scellement a été cassé
